# FASCICULE DE BREVET EUROPEEN

(11) **EP 0 809 401 B1**
(45) Date de publication et mention de la délivrance du brevet: **21.11.2001**
(21) Numéro de dépôt: 97201435.1
(22) Date de dépôt: 13.05.1997
(51) Int. Cl.: H04N 7/16

(54) **Procédé pour la lecture d'une carte de service**
Verfahren zum Lesen einer Chipkarte
Method for reading a service card

(30) Priorité: 22.05.1996 FR 9606357
(43) Date de publication de la demande: 26.11.1997
(73) Titulaire: Koninklijke Philips Electronics N.V., 5621 BA Eindhoven (NL)
(72) Inventeur: Goujon, Patrick, 75008 Paris (FR); Le Berre, Jacques, 75008 Paris (FR); Rakhodai, Issa, 75008 Paris (FR)
(74) Mandataire: Charpail, François

(56) Documents cités:
- WO-A-94/14284
- US-A- 5 367 571
- CABLE TV SESSIONS, MONTREUX, JUNE 10 - 15, 1993, no. SYMP. 18, 11 Juin 1993, POSTES;TELEPHONES ET TELEGRAPHES SUISSES, pages 458-462, XP000379372 BOYER R: "DIGITAL BROACAST SATELLITE SYSTEM"

## Description

La présente invention concerne un procédé pour la lecture d'informations de service, dans un récepteur de vidéo-communication muni de moyens de réception et de déchiffrage de signaux chiffrés envoyés au récepteur par un émetteur de télévision, les dits moyens comprenant notamment un microprocesseur associé à une mémoire vive et à une mémoire morte contenant des instructions et un module de déchiffrage pour déchiffrer les dits signaux chiffrés, procédé selon lequel on introduit dans le récepteur, dans un mode de service, des informations chiffrées.

Elle concerne aussi un récepteur de vidéo-communication, comportant des moyens de réception et de déchiffrage de signaux chiffrés envoyés au récepteur par un émetteur de télévision, les dits moyens comprenant notamment un microprocesseur associé à une mémoire vive et à une mémoire morte contenant des instructions et un module de déchiffrage pour déchiffrer les dits signaux chiffrés.

Elle concerne enfin une carte à microprocesseur, destinée à un récepteur selon l'invention.

Un système de télévision avec désembrouillage d'images est connu de la demande de brevet WO 93/07715 (Thomson). Selon ce document, une carte à microprocesseur spécifique est utilisée par un installateur pour réaliser automatiquement, dans un récepteur, la mise à jour de l'allocation des canaux de télévision selon le site de réception.

Une telle mise à jour d'un récepteur peut concerner les fréquences de réception mais aussi des données d'authentification de l'abonnement de l'usager. De ce fait, il est utile que les informations de service, ou au moins certaines d'entre elles, soient chiffrées, pour être à l'abri de malveillances. Il est donc nécessaire, en principe, d'utiliser un module de déchiffrage qui délivre des données en clair, à partir d'informations de service chiffrées, sur la base d'un code secret et/ou d'instructions de déchiffrage qui lui sont fournies. Les instructions de déchiffrage peuvent, en outre, être elle mêmes chiffrées.

Un objet de l'invention est de simplifier la réalisation d'un système capable de recevoir et de déchiffrer de telles informations de service.

A cet effet, pour déchiffrer les dites informations, on utilise le module de déchiffrage du récepteur lui même, c'est-à-dire qu'un récepteur est muni de moyens pour faire déchiffrer les informations de service par son propre module de déchiffrage.

Ainsi un module de déchiffrage spécifique devient inutile.

Dans une forme de réalisation particulière, des informations de service chiffrées sont chargées dans une mémoire vive du récepteur, puis mises en forme par le microprocesseur, avant d'être traitées par le module de déchiffrage du récepteur, c'est-à-dire qu'un récepteur est muni de moyens pour charger des informations de service chiffrées dans la mémoire vive, et pour les mettre sous une forme qui simule des signaux envoyés au récepteur par un émetteur, avant de les traiter au moyen de son module de déchiffrage.

Dans une autre forme de réalisation, les informations chiffrées sont portées par un flux de données qui simule des signaux envoyés au récepteur par un émetteur de télévision, c'est-à-dire que ce flux est organisé en paquets de même format que celui de tels signaux.

Ainsi les informations peuvent être transmises directement au module de déchiffrage du récepteur.

Selon une variante, on utilise comme support, pour les informations introduites dans le récepteur, une carte de service à microprocesseur placée dans un lecteur de carte du récepteur, c'est-à-dire qu'un récepteur, équipé d'un lecteur de carte à microprocesseur, est muni de moyens pour lire une carte de service placée dans le dit lecteur.

Selon une autre variante, on utilise, pour introduire des informations dans le récepteur, un connecteur de liaison avec l'extérieur, porté par le récepteur, c'est-à-dire que ce dernier est muni de moyens pour recevoir des informations de service chiffrées, via ce connecteur.

Une carte de service produit avantageusement un flux de données chiffrées qui simule des signaux envoyés au récepteur par un émetteur, c'est-à-dire qu'il est organisé en paquets de même format que celui de tels signaux.

Ces aspects de l'invention ainsi que d'autres aspects plus détaillés apparaîtront plus clairement grâce à la description suivante d'un mode de réalisation constituant un exemple non limitatif.

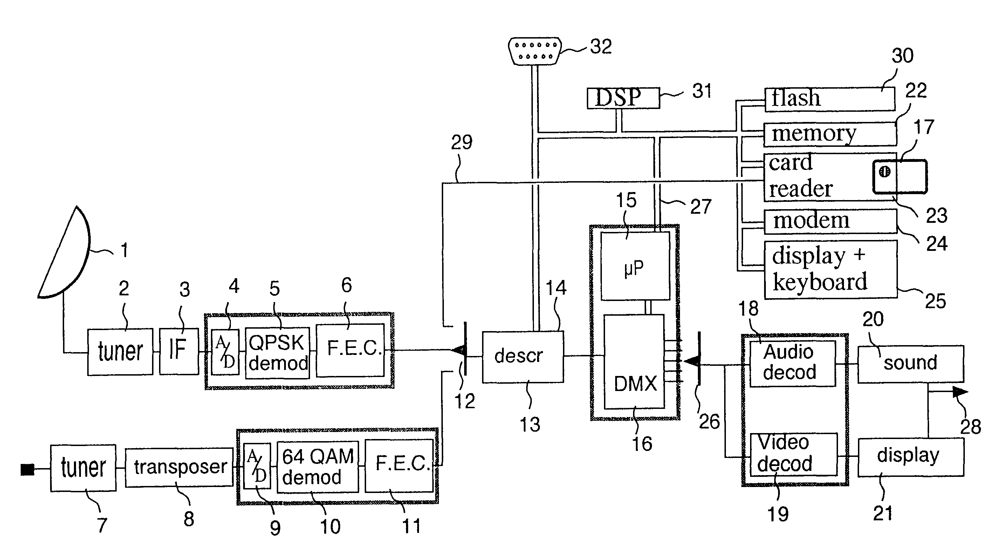

La figure unique représente schématiquement un récepteur de vidéo-communication, équipé d'un lecteur de carte à microprocesseur.

Le récepteur de vidéo-communication représenté par la figure comprend un ensemble de réception satellite 1-6 et un ensemble de réception par câble 7-11.

L'ensemble de réception satellite est constitué d'une antenne parabolique 1 et d'un tuner 2, suivi d'un amplificateur à fréquence intermédiaire 3. A ce niveau le signal est modulé selon un procédé connu, dit QPSK. Le signal à fréquence intermédiaire est converti en valeurs numériques dans un convertisseur analogique-numérique 4, puis il est démodulé par le démodulateur 5 de type QPSK. Enfin, certaines erreurs dans le signal sont corrigées dans un correcteur d'erreurs 6 ("Forward Error Correction"), basé sur le fait que le signal comprend des bits de redondance selon un principe de codage connu.

L'ensemble de réception par câble est constitué, à partir d'une entrée de signal, par un tuner 7 suivi d'un transposeur 8. A ce niveau le signal est modulé selon un procédé connu, dit 64 QAM. Le signal à fréquence intermédiaire est converti en valeurs numériques dans un convertisseur analogique-numérique 9, puis il est démodulé par le démodulateur 10 de type 64 QAM. Enfin, certaines erreurs dans le signal sont corrigées dans un correcteur d'erreurs 11, de même type que le correcteur 6.

A ce niveau, le signal démodulé est appelé MPEG-2 TS (pour "MPEG-2 Transport Stream") : c'est un signal d'une capacité d'environ 36 mégabits, comportant jusqu'à vingt programmes avec des données et du son qui, le cas échéant, sont embrouillés.

Un ensemble de réception satellite et un ensemble de réception par câble sont ici présents ensemble, bien qu'ils soient réalisés, souvent, dans deux appareils distincts. Un commutateur 12 permet ici de choisir le signal du satellite ou celui du câble. Le signal est alors désembrouillé dans un module de désembrouillage 13 relié, par un bus 27, à un lecteur 23 de carte à microprocesseur 17, dite carte à puce, et à un microprocesseur 15.

Le microprocesseur 15 comprend une mémoire morte dans laquelle sont inscrites des instructions de base. Il est associé à une mémoire vive 22 pour des données instantanées, à une mémoire dite "flash" 30, pour mémoriser des éléments de programmes susceptibles d'être mis à jour, ainsi qu'au lecteur de carte 23, à un clavier de commande et/ou un récepteur de télécommande, à un écran d'affichage de données 25, et éventuellement à un modem 24.

Le signal désembrouillé est ensuite soumis à l'action d'un démultiplexeur 16, relié au microprocesseur 15, démultiplexeur qui sépare les uns des autres les différents programmes du signal MPEG-2 TS, l'un d'eux étant sélectionné au moyen d'un commutateur 26. Le signal issu de ce démultiplexeur est encore sous une forme numérique et requiert d'être transformé en un signal analogique pour afficher une image sur un écran et appliquer le son à un haut-parleur. Cette transformation finale est effectuée d'une part dans un décodeur vidéo 19 qui délivre un signal de type connu, par exemple dit 4-2-2, sous la forme YUV, et d'autre part dans un décodeur de son 18. Ces décodeurs sont suivis ici de circuits de traitement ("post-processing") du son 20 et de la vidéo 21, reliés par une connexion 28 à des circuits standard de son et vidéo du récepteur, s'il s'agit d'un téléviseur, ou d'un téléviseur extérieur, dans le cas où le récepteur décrit ici est un boîtier décodeur destiné à être relié à une entrée de signal d'un téléviseur classique de type PAL, SECAM ou NTSC.

Le lecteur 23 de carte à puce 17 sert, bien entendu, à lire dans la carte des informations nécessaires au désembrouillage d'images de télévision, d'une façon connue. Il est utilisé en outre pour introduire dans le récepteur des informations de service, notamment des logiciels. Pour cela, la carte de l'usager, contenant des informations personnelles, telles qu'une clé de distribution, des caractéristiques de l'abonnement à un service de télévision payante, etc, est remplacée, dans le même lecteur, par une carte de service contenant des informations de mise à jour, par exemple des éléments de logiciel, sous forme chiffrée. Il est clair que, en variante, ces informations pourraient aussi être introduites dans le récepteur au moyen d'un connecteur 32, par exemple du type normalisé sous le nom IEEE 1284. Pour l'introduction des informations, ce connecteur peut être relié à un micro-ordinateur du genre connu sous l'appellation "PC", ou à un appareil spécialement conçu pour le réglage des récepteurs, ou à une liaison, par exemple de type RS232, vers une centrale de chargement de données.

Pour déchiffrer les informations de service, on utilise le module de désembrouillage 13 du récepteur lui même. Différents moyens peuvent être employés à cet effet :
- les informations sortant de la carte peuvent être amenées directement au module de désembrouillage 13 par une connexion 29 prévue à cet effet entre le lecteur de carte 23 et le commutateur 12, qui sélectionne alors la connexion 29 pour la relier au module 13. La carte à microprocesseur produit alors un flux de données qui simule des signaux envoyés au récepteur par un émetteur, c'est-à-dire qu'il est organisé en paquets de même format que le signal MPEG-2 TS. Un logiciel adapté, que l'homme du métier sait écrire à la demande, est bien entendu chargé dans une mémoire du microprocesseur pour que les informations issues du module 13 soient reconnues comme destinées à mettre à jour le logiciel, et soient exploitées comme il convient.
- les informations peuvent aussi être transférées, sous forme chiffrée, directement dans la mémoire 22, à partir du lecteur 23, ou du connecteur 32, et être mises ensuite, par le microprocesseur 15 lui même, sous la forme de paquets de même format que le signal MPEG-2 TS, et appliquées alors au module 13. Dans ce cas, il est inutile que la carte à microprocesseur produise un flux de données simulant des signaux envoyés au récepteur par un émetteur.

Les informations dans la carte peuvent présenter une organisation en couches : une première couche contient le mot de contrôle nécessaire au déchiffrage ; ce mot de contrôle peut être lui même sous forme chiffrée. Une clé, fournie par l'installateur, permet de déchiffrer le mot de contrôle, avec lequel seront déchiffrées les autres informations, constituant une deuxième couche. La première couche peut contenir aussi diverses autres informations sur le contenu de la deuxième couche, et sur la manière de le déchiffrer. Il est toujours possible de réaliser, dans certains cas, le déchiffrement d'informations de service au moyen d'instructions de déchiffrement qui sont directement fournies avec les informations de la première couche, c'est-à-dire qui n'utilisent pas le module de déchiffrement du récepteur : alors cela est aussi indiqué dans la première couche. Ceci peut dépendre, par exemple, d'un choix effectué par le diffuseur d'émissions de télévision qui est impliqué dans la fourniture des informations de service.

Ainsi, le mode de fonctionnement de l'ensemble est le suivant (il est supposé que le transfert est fait au moyen d'une carte à microprocesseur) : l'installateur place la carte dans le récepteur, ce dernier reconnaît une carte de service (de façon connue), et lit alors le premier paquet dans la carte, puis dialogue avec l'installateur afin d'obtenir de sa part la clé pour déchiffrer ce premier paquet ; il peut y avoir en outre une signature dans la carte qui permet de reconnaître que la clé fournie par l'installateur est valable, sans pour autant la connaître à l'avance ; différents procédés de chiffrage de ce genre sont connus en soi. Dans le cas où l'invention est mise en oeuvre, les données ainsi obtenues sont transmises au module 13, lui permettant de décoder le reste des paquets contenus sous forme chiffrée dans la carte 17 (deuxième couche). En variante, un micro-contrôleur 31 autonome peut en outre être chargé des opérations de lecture et d'interprétation des informations de la première couche. Si les informations de la première couche indiquent que les informations de la deuxième couche sont sous une forme qui est destinée à être traitée par le module de désembrouillage du récepteur, le micro-contrôleur 31 autonome passe alors le contrôle au micro-processeur principal 15, qui déchiffrera le reste des informations, c'est-à-dire la deuxième couche.

## Revendications

1. Procédé pour la lecture d'informations de service, dans un récepteur de vidéo-communication muni de moyens de réception et de déchiffrage de signaux chiffrés envoyés au récepteur par un émetteur de télévision, les dits moyens comprenant notamment un microprocesseur associé à une mémoire vive et à une mémoire morte contenant des instructions et un module de déchiffrage pour déchiffrer les dits signaux chiffrés, procédé selon lequel on introduit dans le récepteur, dans un mode de service, des informations chiffrées, **caractérisé en ce que**, pour déchiffrer les dites informations, on utilise le module de déchiffrage du récepteur lui même.

2. Procédé selon la revendication 1, **caractérisé en ce que** des informations de service chiffrées sont chargées dans une mémoire vive du récepteur, puis mises en forme par le microprocesseur, avant d'être traités par le module de déchiffrage du récepteur.

3. Procédé selon la revendication 1, **caractérisé en ce que** les informations chiffrées sont portées par un flux de données qui simule des signaux envoyés au récepteur par un émetteur de télévision, c'est-à-dire qu'il est organisé en paquets de même format que celui de tels signaux.

4. Procédé selon l'une quelconque des revendications 1 à 3, **caractérisé en ce qu'**on utilise comme support, pour les informations introduites dans le récepteur, une carte de service à microprocesseur placée dans un lecteur de carte du récepteur.

5. Procédé selon l'une quelconque des revendications 1 à 3, **caractérisé en ce qu'**on utilise, pour introduire des informations dans le récepteur, un connecteur de liaison avec l'extérieur, porté par ce dernier.

6. Récepteur de vidéo-communication, comportant des moyens de réception et de déchiffrage de signaux chiffrés envoyés au récepteur par un émetteur de télévision, les dits moyens comprenant notamment un microprocesseur associé à une mémoire vive et à une mémoire morte contenant des instructions et un module de déchiffrage pour déchiffrer les dits signaux chiffrés, **caractérisé en ce que**, pour introduire dans le récepteur des informations de service chiffrées, le récepteur est muni de moyens pour faire déchiffrer les informations de service par son propre module de déchiffrage.

7. Récepteur de vidéo-communication selon la revendication 6, **caractérisé en ce qu'**il est muni de moyens pour charger des informations de service chiffrées dans la mémoire vive, et pour les mettre sous une forme qui simule des signaux envoyés au récepteur par un émetteur, avant de les traiter au moyen de son module de déchiffrage.

8. Récepteur de vidéo-communication selon l'une des revendications 6 ou 7, équipé d'un lecteur de carte à microprocesseur, **caractérisé en ce qu'**il est muni de moyens pour lire une carte de service placée dans le dit lecteur.

9. Récepteur de vidéo-communication selon l'une des revendications 6 ou 7, équipé d'un connecteur de liaison avec l'extérieur, **caractérisé en ce qu'**il est muni de moyens pour recevoir des informations de service chiffrées, via ce connecteur.

10. Carte à microprocesseur, **caractérisée en ce que**, destinée à un récepteur selon l'une quelconque des revendications 6 à 8, elle produit un flux de données qui simule des signaux envoyés au récepteur par un émetteur, c'est-à-dire qu'il est organisé en paquets de même format que celui de tels signaux, le flux de données représentant des informations de service chiffrées.

## Patentansprüche

1. Verfahren zum Lesen einer Chipkarte in einem Bildempfangsgerät mit Verfahren zum Empfangen und Dechiffrieren von chiffrierten Signalen, die an den Empfänger über einen Fernsehsender übertragen werden, wobei die besagten Verfahren insbesondere einen Mikroprozessor in Verbindung mit einem aktiven Speicher und einem passiven Speicher mit Anweisungen und ein Dechiffriermodul zum Dechiffrieren der besagten chiffrierten Signale enthalten und dem Verfahren nach in den Empfänger in Servicemodus chiffrierte Informationen eingegeben werden, **dadurch gekennzeichnet, daß** man zum Dechiffrieren der besagten Informationen das Dechiffriermodul des Empfängers selbst verwendet.

2. Verfahren nach Anspruch 1, **dadurch gekennzeichnet, daß** die chiffrierten Serviceinformationen in einen aktiven Speicher des Empfängers geladen werden und dann vom Mikroprozessor formatiert werden, bevor sie vom Dechiffriermodul des Empfängers verarbeitet werden.

3. Verfahren nach Anspruch 1, **dadurch gekennzeichnet, daß** die chiffrierten Informationen von einem Datenfluß getragen werden, der von einem Fernsehsender an den Empfänger übertragene Signale simuliert, d.h., daß er in Paketen selben Formats wie diese Signale organisiert ist.

4. Verfahren nach einem beliebigen der Ansprüche 1 bis 3, **dadurch gekennzeichnet, daß** man als Träger für die in den Empfänger eingegebenen Daten eine in den Kartenleser des Empfängers gegebene Mikroprozessor-Chipkarte verwendet.

5. Verfahren nach einem beliebigen der Ansprüche 1 bis 3, **dadurch gekennzeichnet, daß** man zum Einführen der Daten in den Empfänger einen von diesem getragenen Verbindungsanschluß nach außen verwendet.

6. Bildempfangsgerät mit Verfahren zum Empfangen und Dechiffrieren von chiffrierten Signalen, die an den Empfänger über einen Fernsehsender übertragen werden, wobei die besagten Verfahren insbesondere einen Mikroprozessor in Verbindung mit einem aktiven Speicher und einem passiven Speicher mit Anweisungen und ein Dechiffriermodul zum Dechiffrieren der besagten chiffrierten Signale enthalten, **dadurch gekennzeichnet, daß** zum Einführen chiffrierter Serviceinformationen in den Empfänger der Empfänger mit Vorrichtungen zum Dechiffrieren der Serviceinformationen durch sein eigenes Dechiffriermodul versehen ist.

7. Bildempfangsgerät nach Anspruch 6, **dadurch gekennzeichnet, daß** es mit Vorrichtungen ausgerüstet ist, um chiffrierte Serviceinformationen in den aktiven Speicher zu laden und um sie in ein Format zu bringen, das von einem Sender an den Empfänger übertragene Signale simuliert, bevor sie vom Dechiffriermodul verarbeitet werden.

8. Bildempfangsgerät nach einem der Ansprüche 6 oder 7, mit einem Mikroprozessor-Kartenleser ausgerüstet, **dadurch gekennzeichnet, daß** er mit Vorrichtungen versehen ist, um eine in den besagten Leser gegebene Chipkarte zu lesen.

9. Bildempfangsgerät nach einem der Ansprüche 6 oder 7, mit einem Verbindungsanschluß nach außen ausgerüstet, **dadurch gekennzeichnet, daß** er mit Vorrichtungen versehen ist, um chiffrierte Serviceinformationen über diesen Anschluß zu erhalten.

10. Mikroprozessorkarte, **dadurch gekennzeichnet, daß** sie für einen Empfänger nach einem beliebigen der Ansprüche 6 bis 8 bestimmt ist und einen Datenfluß erzeugt, der von einem Sender an den Empfänger übertragene Signale simuliert, d.h., daß er in Paketen desselben Formats wie solche Signale organisiert ist, wobei der Datenfluß chiffrierte Serviceinformationen beinhaltet.

## Claims

1. A method of reading service information in a video-communication receiver provided with means for receiving and deciphering ciphered signals transmitted to the receiver by a television transmitter, said means particularly comprising a microprocessor associated with a random-access memory and a read-only memory containing instructions, and a deciphering module for deciphering said ciphered signals, in which method ciphered information is introduced into the receiver in a service mode, **characterized in that** the deciphering module of the receiver itself is used for deciphering said information.

2. A method as claimed in claim 1, **characterized in that** ciphered service information is loaded into a random-access memory of the receiver and is subsequently formed by the microprocessor before being treated by the deciphering module of the receiver.

3. A method as claimed in claim 1, **characterized in that** the ciphered information is conveyed by a data stream which simulates signals transmitted to the receiver by a television transmitter, i.e. it is organized in packets of the same format as that of such signals.

4. A method as claimed in any one of claims 1 to 3, **characterized in that** a microprocessor service card placed in a card reader of the receiver is used as a support for the information introduced into the receiver.

5. A method as claimed in any one of claims 1 to 3, **characterized in that** a connector provided on the receiver for connection with the exterior is used for introducing the information into said receiver.

6. A video-communication receiver comprising means for receiving and deciphering ciphered signals transmitted to the receiver by a television transmitter, said means particularly comprising a microprocessor associated with a random-access memory and a read-only memory containing instructions, and a deciphering module for deciphering said ciphered signals, **characterized in that**, for introducing ciphered service information into the receiver, said receiver is provided with means for deciphering the service information by means of its own deciphering module.

7. A video-communication receiver as claimed in claim 6, **characterized in that** it is provided with means for loading ciphered service information into the random-access memory and for giving said information a form which simulates signals transmitted to the receiver by a transmitter before treating them by means of its own deciphering module.

8. A video-communication receiver as claimed in any one of claim 6 or 7, equipped with a microprocessor card reader, **characterized in that** said receiver is provided with means for reading a service card placed in said reader.

9. A video-communication receiver as claimed in any one of claim 6 or 7, provided with a connector for connection with the exterior, **characterized in that** said receiver is provided with means for receiving ciphered service information via said connector.

10. A microprocessor card, **characterized in that** said card, intended for a receiver as claimed in any one of claims 6 to 8, produces a data stream which simulates signals transmitted to the receiver by a transmitter, i.e. it is organized in packets of the same format as that of said signals, the data stream representing ciphered service information.
